# EUROPEAN PATENT APPLICATION

(11) **EP 1 478 104 A1**
(43) Date of publication of application: **17.11.2004**
(21) Application number: 04252727.5
(22) Date of filing: 11.05.2004
(51) Int. Cl.: H04B 7/005

(54) **Variable transmission power steps**

(30) Priority: 14.05.2003 GB 0311115
(71) Applicant: Ubinetics Limited, Melbourn, Hertfordshire SG8 6DP (GB)
(72) Inventor: Appleton, Ian K., Letchworth Hertfordshire SG6 2HQ (GB); Goodwin, Stephen, Ely Cambridgeshire CB6 2SR (GB)
(74) Representative: Wright, Howard Hugh Burnby

(57) **Abstract**

A telecommunication device for use in a telecommunications system comprises a transmitter element for transmitting a signal to a remote base station over a transmitter power range, a power detector arranged to detect the power of the signal transmitted by the transmitter element over a detected power range that is narrower than the transmitter power range and a step size correcting element arranged to identify when the power of transmission is different from the desired power level and to apply a correction factor to increase or decrease the size of any step up or down the transmitter power range. Thus the device is able to remain within the range defined by the UMTS specification.

## Description

The present invention relates to the control of the transmission power of telecommunications devices, such as mobile telephone handsets, to a defined accuracy. The invention has particular application to telecommunication systems using W-CDMA.

Telecommunication devices transmit signals to base stations which are connected to, and form part of, a telecommunications network. The power of transmission needs to be varied, depending on various factors such as distance from the base station, geographic terrain, weather conditions and the like. As a consequence, devices increase and decrease the power level across a transmission power range.

The UMTS specification 3GPP TS 25.101 places a requirement on telecommunications devices to control their transmission power to a defined accuracy range, and the accuracy range narrows as the power level reaches its maximum value. In earlier mobile telephone systems, such as GSM, there are accuracy range requirements, but in those cases, closed loop control of the transmission power is easily applicable because the transmission power range is narrower. However, with the UMTS specifications that apply to W-CDMA, it is not possible to apply closed loop control to the transmit power directly. This is because the W-CDMA signal has a 5MHz wide bandwidth which makes it very difficult to implement a closed loop system due to phase changes in the loop. Therefore, UMTS devices will typically use open loop power control where precise calibration takes place during manufacture to ensure that the actual transmission power is within the accuracy range defined by the UMTS specifications. Unfortunately, the calibration required is a lengthy process since calibration must take place across the entire bandwidth and power range.

According to a first aspect of the present invention, a telecommunication device for use in a telecommunications system comprises a transmitter element for transmitting a signal to a remote base station over a transmitter power range, a power detector arranged to detect the power of the signal transmitted by the transmitter element over a detector power range that is narrower than the transmitter power range; and a step size correcting element arranged to identify when the power of transmission is different from the desired power level and to apply a correction factor to increase or decrease the size of any step up or down the transmitter power range. In service calibration is carried out using open loop power control for part of the power range and closed loop control for another part of the power range. In this way, the lengthy calibration procedure in production can be eliminated, or at least very much reduced. Closed loop calibration occurs by use of the power detector associated with the device which accurately measures the actual power. It is preferred that this will be applied to the part of the UMTS transmit power range that has the narrowest accuracy range. It is intended that open loop power control be used for the remainder of the transmission power range. Open loop power control is sufficiently accurate to maintain the actual transmit power within the broader accuracy range part of the transmission power range.

A further means for identifying the point at which a correction factor must begin to be applied may also be included, where the accuracy range becomes narrower, and where the correction factor for each step is limited. The correction factor must not normally be greater than a specified size. The application of a correction factor is important to bring a transmitted power level closer to the desired power level incrementally as the power levels step up and down the transmission power range. Where an accuracy range becomes narrower at a greater rate than the correction factor is able or permitted to be applied, it is important to be able to identify when the correction factor must begin to be applied so that the correction factor is applied early enough that the actual power level transmitted does not fall outside the permitted power accuracy range.

Normally, it is expected that the device will include a power controller arranged to receive an indication of the power level that is desired to be transmitted by the transmitter element, to receive an indication of the power detected by the detector, and to control the power of transmission of the transmitter element across the full transmitter power range.

It is also preferred that the device further include a receiver arranged to receive signals from the base station, which signals indicate desired step changes in transmitter power levels, and to output the indicated step changes to the power controller which operates on an open loop basis to make corresponding step changes to the power level transmitted by the transmitter element. In this way the base station is able to indicate to the device when the power level needs to be increased or decreased in a stepwise manner.

It is further advantageous to include a memory unit arranged to hold a table defining the settings of the power controller relative to the transmitter power levels of the transmitter element during open loop control. The use of the table allows the power level to remain within the required accuracy range.

The device preferably includes an intermediate frequency (IF) stage and a radio frequency (RF) stage, each of which is adjustable for gain. In addition, it is also preferred that the device further comprise a baseband I/Q stage which is adjustable. The power controller may be arranged to control the power transmission of the transmitter element by adjusting the IF and/or the RF gain, and/or the baseband I/Q.

According to a second aspect of the invention, a telecommunications device for use in a telecommunications systems comprises a transmitter element for a transmitter element for transmitting a signal to a remote base station, a power detector arranged to detect the power of the signal transmitted by the transmitter element, a power controller arranged to receive an indication of the power level that is desired to be transmitted by the transmitter element, to receive an indication of the power detected by the detector, and to control the power of transmission of the transmitter element, a step size correcting element arranged to identify when the power of transmission is different from the desired power level and to apply a correction factor to increase or decrease the size of any step up or down the transmitter power range.

According to a third aspect of the invention, a telecommunications device for use in a telecommunications system comprises a transmitter element for a transmitter element for transmitting a signal to a remote base station, a power controller arranged to receive an indication of the power level that is desired to be transmitted by the transmitter element, and to control the power of transmission of the transmitter element, an intermediate frequency (IF) stage and a radio frequency (RF) stage, each of which is adjustable for gain, and a memory unit arranged to hold a table of IF and RF gain settings relative to the transmitter power levels of the transmitter element during open loop control.

According to a fourth aspect of the invention, a method of controlling the power of a signal transmitted by a transmitter element of a telecommunications device comprises the steps of detecting the power of the signal transmitted by the transmitter element over a detector power range that is narrower than the power range of the transmitter within the detector power range, comparing the power level that is desired to be transmitted by the transmitter element with the detected power of the signal transmitted by the transmitter element; and identifying when the power of transmission is different from the desired power level and applying a correction factor to increase or decrease the size of any step up or down the transmitter power range.

The method may further comprise a step of identifying the point at which a correction factor must begin to be applied where the accuracy range becomes narrower, and where the correction factor for each step is limited.

The method preferably includes the step of controlling the power of transmission of the transmitter element across the full transmitter power range.

It is preferred that the method further comprises the step of open loop control the power of transmission of the transmitter element outside of the detector power range.

It is further preferred that the method further comprises the steps of receiving signals from a base station which signals indicate desired step changes in the power levels of the transmitter element and controlling the power of transmission of the transmitter element on an open loop basis to make corresponding step changes which correspond with the step changes indicated by the received signal. According to one arrangement, the method further comprises the step of holding a table in memory defining the controlled signals supplied to the transmitter element relative to the power levels of the transmitter device during open loop control.

According to a fifth aspect of the invention, a method of controlling the power of a signal transmitted by a transmitter element of a telecommunications device comprises the steps of detecting the power of the signal transmitted by the transmitter element, comparing the power level that is desired to be transmitted by the transmitter element with the detected power of the signal transmitted by the transmitter element, controlling the power of transmission, identifying when the power of transmission is different from the desired power level and applying a correction factor to increase or decrease the size of any step up or down the transmitter power range.

According to a sixth aspect of the invention, a method of controlling the power of a signal transmitted by a transmitter element of a telecommunications device comprises the steps of detecting the power of the signal transmitted by the transmitter element, comparing the power level that is desired to be transmitted by the transmitter element with the detected power of the signal transmitted by the transmitter element, controlling the power of transmission of the transmitter element using an intermediate frequency (IF) stage and a radio frequency (RF) stage, each of which is adjustable for gain, and holding a table in memory defining the IF and RF gain settings relative to the power levels of the transmitter device during open loop control.

It should be appreciated here that this calibration is the calibration of power steps through the power range. As the device takes steps up and down the transmit power range, it is important that the actual power steps are within the specification so that, for example, when the telecommunications base station sends a signal that the power of the unit should be increased by a step of a particular size, the unit actually increases the step by the appropriate amount. Therefore, this combination of open and closed loop calibration which takes place ensures that the gradient of desired power over actual power is sufficiently accurate that it falls within the accuracy range.

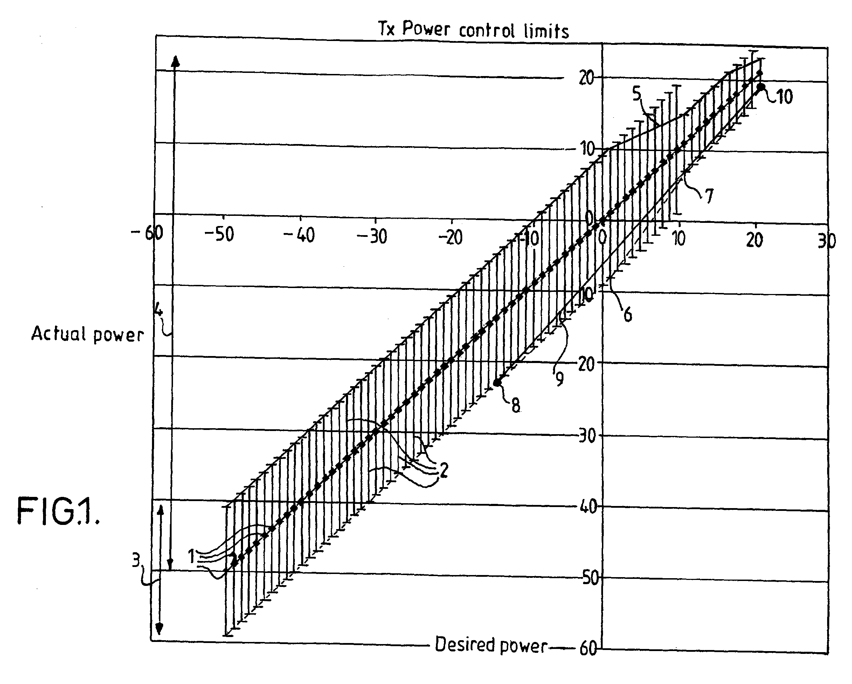

The invention will now be described in more detail below by way of example and with reference to Figure 1, which is a graph showing actual transmission power plotted against the desired power with bars showing the permitted accuracy range within the UMTS specification.

The UMTS specification places a requirement on mobile telecommunication devices to control their transmission power to a defined accuracy. This is indicated in Figure 1. In Figure 1, the desired power output is plotted on the x-axis, and the actual power output is plotted on the y-axis. The line of points 1 on the graph indicate power steps for the ideal situation where the actual power is equal to the desired power, and these points 1 form a straight line passing through the origin having a gradient of 1. Each point 1 plotted on the graph includes a bar 2 showing the accuracy range within which the actual power must fall for particular desired powers. The accuracy range for a desired power level of - 50 dBm is indicated in the Figure by an arrow 3. For example, where the desired power is -20 dBm it is permitted for the actual power to fall somewhere in the range between -11 dBm and -29 dBm. However, it will be noted that the accuracy range above a desired power of 10 dBm is substantially less than for lower desired powers. This is indicated by short bars for the point above 10 dBm. As a result of the accuracy range being much narrower, open loop controlled power steps up and down the power range must be closely controlled, but instead of using open loop control of the transmission power, this telecommunication device includes a power detector. Suitable power detectors must be accurate over a large range of power levels, but no suitable detectors are available covering the entire 71 dBm power range from -50dBm to +21dBm. It must be borne in mind that a suitable detector must be accurate across a broad power range and a broad frequency range, and must also be temperature stable across both frequency and power ranges. Power detectors that are able work across the whole range are not available. In this example, the power range is indicated by arrow 4 in Figure 1.

Since open loop power control requires a considerable amount of work during production in order to calibrate it, closed loop power control is used for part of the power range, and open loop control is used for the remainder. A suitable device is an Analog Devices Inc. RF detector/controller AD8314 which has a power range of 35dBm. It is, therefore, arranged to detect the power at the upper end of the power range from -14dBm to +21dBm. The remaining range below -14dBm uses open loop power control. Of course, the detector could be arranged to detect a different part of the power range, but since closed loop power control is generally more accurate than open loop power control, a narrower accuracy range at the top end of the power range means that it is advantageous to use the closed loop control for the top end of the range. It is important, that, as the desired power is stepped up and down, the actual power increases and reduces in steps falling within tolerance.

It will be appreciated from Figure 1 that, as steps are taken to increase the power levels, the situation can arise where, if the actual power level is towards the top end of the accuracy range, if the desired power increases above 10dBm, the actual power must fall in order to fit within the narrower accuracy range. As a consequence, it is desirable that the line bounding the top of the accuracy range always has a positive gradient. It will, therefore, be seen that a line 5 is indicated which effectively reduces the accuracy range for a desired power of +1dBm to + 11dBm in order to achieve a smooth, positively gradiented transition.

Also, it will be appreciated that, if the actual power is towards the lower end of the accuracy range as the power levels increase, a very large increase in power is required to go from a desired power of 10dBm to a desired power of +11dBm. This step up in power might not fall within the UMTS specification. Therefore, it will seen that a smoothing effect is intended to be achieved by narrowing the lower end of the accuracy range between a desired power of +1dBm, where the lower end of the accuracy range 6 is -8dBm, and a desired power of 11dBm, where the lower permitted point 7 within the specification is 7dBm. Therefore, the step size is controlled to bring any potential error in the absolute output power level as a result of being in the open loop, to within the tolerance levels permitted for any power level within the closed loop system. It makes use of the fact that the power level step size is specified to have a small tolerance. The invention uses this tolerance to select a step size of the step plus or minus a correction factor for each step commanded by the network in such a way that the actual transmitted power converges with the required power level as quickly as possible. The open loop operation is simply the level set by the gain control according to the nominal desired power to actual output power level calibrated during a calibration process. The offset that may exist between the desired and actual power output is maintained until the power level increases into the range controlled by closed loop control.

Since the upper end of the power range controlled by open loop control is at -14dBm, as the power levels increase from the open loop control range into the closed loop control range, if the actual power level falls below the desired power level, this will be detected by the detector, and the step sizes will increased by 0.2 dB (the correction factor) above the increment requested by the network. In this way, over a 10dB increase in power level, an extra 2dB can be added giving a 20% slope as permitted by the UMTS specification. Likewise if the actual power is above the appropriate desired power, the step sizes will be decreased by 0.2dB.

To achieve appropriate increases or decreases in power step sizes, the telecommunications device will include a step size correcting element which is able to identify when the power of transmission is different from the desired power level, whereby the correction factor can then be applied. It is particularly important that the step size correcting element is able to recognise when the actual power of transmission is close to going outside of the UMTS specification. This might occur if the actual power falls outside of the narrow ranges permitted by the UMTS specification for a particular desired power. Also, where the actual power comes close to crossing the line 5, this will be identified by the step size correcting element which will then apply an appropriate correction factor. In this way, the steps size correcting element also carries out the function of identifying the point at which a correction factor must be applied.

The power level from the telecommunication device is controlled by three different stages, firstly, the baseband I/Q level, secondly the intermediate frequency (IF) gain, and thirdly the radio frequency (RF) gain. Coarse gain steps down to about 1dB are executed by adjustment of the RF and IF gain stages. The necessary relationship between the RF and IF gain stages is maintained. If the IF gain is too high, the transmission signal will be distorted by the RF section, leading to high spurious signals. If it is too low, the signal to noise ratio of the transmitted signal will be decreased. Therefore it is important to maintain an optimum relationship between the IF and the RF gain stages.

At lower RF gain settings, the output IP3 (the third order intercept point, i.e. the point on a graph of output power verus input power where the third order output line crosses the linear first order slope) reduces and so the input to the RF pre amplifier has to reduce accordingly. The relationship between the input power level to the pre amplifier and its gain is maintained at a level that keeps the linearity within required limits. A table will be loaded into a baseband memory which gives the gain of IF and RF stages at every nominal power level in dB increments. In this way the open loop control is established.

In order to achieve very fine resolution, the I/Q levels will be adjusted independently of the table. These will be adjusted for fine steps on top of a nominal 1dB step size set in the IF/RF gain table.

In addition, where a correction factor is to be applied, the gain stages will be controlled to increase or decrease the output power by the correction factor.

### Example

A worst case example will now be described:
At a desired power level of -14 dBm, if the actual power is at the minimum power permitted under the UMTS specification, the actual power will be -23dBm. This is indicated by a point 8 marked on the graph in Figure 1. It will be understood that for each 1dB step upwards, the actual power will be increased by 1dBm plus the correction factor of 0.2dBm. This is plotted as a line 9 on the graph in Figure 1, which leads to point 10 at a desired power level of 21dBm where the actual power is 19dBm. At all stages, the actual power level remains within the specification for UMTS, and the step size remains within the specified limits. The need to use a correction factor is identified by the step size correcting element which also applies the appropriate correction factor to the step changes.

When the desired and actual power levels are within 0.5dB of each other, the increment will be set to that dictated by the network without any additional increment. If the actual power level goes above the desired power level, them there will be decrement of 0.2 dB per step decrease in desired power level. The decrease in this case is the correction factor.

In the case of a transport format combination change, a possible step change requirement exists to increase the output level by 20dB with a maximum of 4dB error. This corresponds to the 20% error slope described above using the correction factor. If the actual power level measured is on the worst case slope, then it will increase the power by 24dB or 16dB depending on whether or not the actual power is below or above the desired power, to bring it within the desired specification. All other step changes are also 20% or greater slope, so the increase or decrease in power level can be adjusted accordingly, while maintaining the required accuracy at the higher power levels.

The present invention has a number of advantages. Firstly, calibration is very quick in that only a nominal calibration is necessary, and in this case, it is the detector which is calibrated so that it is accurate across its power and frequency ranges. In addition, the present invention achieves the accuracy required within the UMTS specification without the need for open loop control tables across the entire power range which cover both frequency and voltage variations. One of the great advantages of the present invention is that the required accuracy is achieved without the need for a detector which has a dynamic range covering the entire range of powers of the W-CDMA. In this case a 71 dB dynamic range would be required, but sufficiently accurate power levels are achieved using a detector with a smaller dynamic range. The system is able to respond rapidly to power level changes.

It will be understood that this invention is particularly applicable to W-CDMA transmission where the dynamic range is wider than the range of commonly available detectors which have sufficient accuracies over that range, and where an open loop system would normally be likely to be used, but might be applicable to other systems.

## Claims

1. A telecommunications device for use in a telecommunications system comprising:
a transmitter element for transmitting a signal to a remote base station over a transmitter power range;
a power detector arranged to detect the power of the signal transmitted by the transmitter element over a detector power range that is narrower than the transmitter power range; and
a step size correcting element arranged to identify when the power of transmission is different from the desired power level and to apply a correction factor to increase or decrease the size of any step up or down the transmitter power range.

2. A telecommunications device according to claim 1, wherein the correction factor is not more than a specified size.

3. 1A telecommunications device according to claim 1 or 2, wherein the step size correcting element includes a means for identifying the point at which a correction factor must begin to be applied where the accuracy range becomes narrower and where the correction factor for each step is limited.

4. A telecommunications device according to any one of the preceding claims, further comprising:
a power controller arranged to receive an indication of the power level that is desired to be transmitted by the transmitter element, to receive an indication of the power detected by the detector, and to control the power of transmission of the transmitter element across the full transmitter power range.

5. A telecommunications device according to claim 4, wherein the power controller is arranged to provide open loop control of the power of transmission of the transmitter element outside of the detector power range.

6. A telecommunications device according to claim 5, further comprising a receiver arranged to receive signals from the base station, which signals indicate desired step changes in transmitter power levels, and to output the indicated step changes to the power controller which operates on an open loop basis to make corresponding step changes to the power level transmitted by the transmitter element.

7. A telecommunications device according to claim 5 or 6, further comprising a memory unit arranged to hold a table defining the settings of the power controller relative to the transmitter power levels of the transmitter element during open loop control.

8. A telecommunications device according to any one of claims 4 to 7, further comprising an intermediate frequency (IF) stage and a radio frequency (RF) stage, each of which is adjustable for gain.

9. A telecommunications device according to claim 8, wherein the power controller controls the power of transmission of the transmitter element by adjusting the IF and/or the RF gain.

10. A telecommunications device according to any one of claims 4 to 9, further comprising a baseband I/Q stage, the power of which is adjustable.

11. A telecommunications device according to claim 10, wherein the power controller controls to power of transmission of the transmitter element by adjusting the baseband I/Q.

12. A telecommunications device for use in a telecommunications system comprising:
a transmitter element for transmitting a signal to a remote base station;
a power detector arranged to detect the power of the signal transmitted by the transmitter element;
a power controller arranged to receive an indication of the power level that is desired to be transmitted by the transmitter element, to receive an indication of the power detected by the detector, and to control the power of transmission of the transmitter element;
a step size correcting element arranged to identify when the power of transmission is different from the desired power level and to apply a correction factor to increase or decrease the size of any step up or down the transmitter power range.

13. A telecommunications device according to claim 12, wherein the correction factor is not more than a specified size.

14. 1A telecommunications device according to claim 13, wherein the specified size is 0.2dB per 1dB step in power.

15. A telecommunications device according to any one of claims 12 to 14, wherein the step size correcting element includes a device for identifying the point at which a correction factor must begin to be applied where the accuracy range becomes narrower, and where the correction factor for each step is limited.

16. A telecommunications device according to any one of claims 12 to 15, further comprising a receiver arranged to receive signals from the base station, which signals indicate desired step changes in transmitter power levels, and to output the indicated step changes to the power controller which operates on an open loop basis to make corresponding step changes to the power level transmitted by the transmitter element.

17. A telecommunications device according to any one of claims 12 to 15, further comprising a memory unit arranged to hold a table defining the settings of the power controller relative to the transmitter power levels of the transmitter element during open loop control.

18. A telecommunications device according to any one of the claims 12 to 17 further comprising an intermediate frequency (IF) stage and a radio frequency (RF) stage, each of which is adjustable for gain.

19. A telecommunications device according to claim 18, wherein the power controller controls the power of transmission of the transmitter element by adjusting the IF and/or the RF gain.

20. A telecommunications device according to any one of the claims 12 to 19, further comprising a baseband I/Q stage, the power of which is adjustable.

21. A telecommunications device according to claim 20, wherein the power controller controls to power of transmission of the transmitter element by adjusting the baseband I/Q.

22. A telecommunications device for use in a telecommunications system comprising:
a transmitter element for transmitting a signal to a remote base station;
a power controller arranged to receive an indication of the power level that is desired to be transmitted by the transmitter element, and to control the power of transmission of the transmitter element;
an intermediate frequency (IF) stage and a radio frequency (RF) stage, each of which is adjustable for gain; and
a memory unit arranged to hold a table of IF and RF gain settings or settings at other frequencies relative to the transmitter power levels of the transmitter element during open loop control.

23. A telecommunications device according to claim 22, wherein the power controller is arranged to provide open loop control of the power of transmission of the transmitter element outside of the detector power range.

24. A telecommunications device according to claim 23, further comprising a receiver arranged to receive signals from the base station, which signals indicate desired step changes in transmitter power levels, and to output the indicated step changes to the power controller which operates on an open loop basis to make corresponding step changes to the power level transmitted by the transmitter element.

25. A telecommunications device according to any one of claims 22 to 24, wherein the power controller controls the power of transmission of the transmitter element by adjusting the IF and/or the RF gain.

26. A telecommunications device according to any one of claims 22 to 25, further comprising a baseband I/Q stage, the power of which is adjustable.

27. A telecommunications device according to claim 26, wherein the power controller controls to power of transmission of the transmitter element by adjusting the baseband I/Q.

28. A telecommunications device according to any one of claims 22 to 27, further comprising a step size correcting element arranged to identify when the power of transmission is different from the desired power level and to apply a correction factor to increase or decrease the size of any step up or down the transmitter power range.

29. A telecommunications device according to claim 28, wherein the step size correcting element includes a means for identifying the point at which a correction factor must begin to be applied where the accuracy range becomes narrower and where the correction factor for each step is limited.

30. A method of controlling the power of a signal transmitted by a transmitter element of a telecommunications device comprising the steps of:
detecting the power of the signal transmitted by the transmitter element over a detector power range that is narrower than the power range of the transmitter;
within the detector power range, comparing the power level that is desired to be transmitted by the transmitter element with the detected power of the signal transmitted by the transmitter element; and
identifying when the power of transmission is different from the desired power level; and
applying a correction factor to increase or decrease the size of any step up or down the transmitter power range.

31. A method according to claim 34, further comprising the step of identifying the point at which a correction factor must begin to be applied where the accuracy range becomes narrower, and where the correction factor for each step is limited.

32. A method according to claim 30 or 31, further comprising the step of:
controlling the power of transmission of the transmitter element across the full transmitter power range.

33. A method according to any one of claims 30 to 32, further comprising the step of open loop control of the power of transmission of the transmitter element outside of the detector power range.

34. A method according to claim 33, further comprising the steps of:
receiving signals from a base station which signals indicate desired step changes in the power levels of the transmitter element; and
controlling the power of transmission of the transmitter element on an open loop basis to make corresponding step changes which correspond with the step changes indicated by the received signal.

35. A method according to claim 33 or 34 further comprising the step of holding a table in memory defining the control signals supplied to the transmitter element relative to the power levels of the transmitter device during open loop control.

36. A method of controlling the power of a signal transmitted by a transmitter element of a telecommunications device comprising the steps of;
detecting the power of the signal transmitted by the transmitter element; comparing the power level that is desired to be transmitted by the transmitter element with the detected power of the signal transmitted by the transmitter element;
controlling the power of transmission;
identifying when the power of transmission is different from the desired power level; and
applying a correction factor to increase or decrease the size of any step up or down the transmitter power range.

37. A method according to claim 36, further comprising the step of identifying the point at which a correction factor must begin to be applied where the accuracy range becomes narrower, and where the correction factor for each step is limited.

38. A method according to claim 36 or 37, further comprising the step of open loop control of the power of transmission of the transmitter element outside of the detector power range.

39. A method according to claim 38, further comprising the steps of:
receiving signals from a base station which signals indicate desired step changes in the power levels of the transmitter element; and
controlling the power of transmission of the transmitter element on an open loop basis to make corresponding step changes which correspond with the step changes indicated by the received signal.

40. A method according to claim 38 or 39 further comprising the step of holding a table in memory defining the control signals supplied to the transmitter element relative to the power levels of the transmitter device during open loop control.

41. A method of controlling the power of a signal transmitted by a transmitter element of a telecommunications device comprising the steps of:
detecting the power of the signal transmitted by the transmitter element;
comparing the power level that is desired to be transmitted by the transmitter element with the detected power of the signal transmitted by the transmitter element;
controlling the power of transmission of the transmitter element using an intermediate frequency (IF) stage and a radio frequency (RF) stage, each of which is adjustable for gain; and
holding a table in memory defining the IF and RF gain settings relative to the power levels of the transmitter device during open loop control.

42. A method according to claim 41 further comprising the step of open loop control of the power of transmission of the transmitter element outside of the detector power range.

43. A method according to claim 42, further comprising the steps of:
receiving signals from a base station which signals indicate desired step changes in the power levels of the transmitter element; and
controlling the power of transmission of the transmitter element on an open loop basis to make corresponding step changes which correspond with the step changes indicated by the received signal.

44. A method according to any one of claims 41 to 43 further comprising the steps of:
identifying when the power of transmission is different from the desired power level; and
applying a correction factor to increase or decrease the size of any step up or down the transmitter power range.

45. A method according to claim 44, further comprising the step of identifying the point at which a correction factor must begin to be applied where the accuracy range becomes narrower, and where the correction factor for each step is limited.

46. A telecommunications device for use in a telecommunications system comprising:
a transmitter element for transmitting a signal to a remote base station over a transmitter power range;
a power detector arranged to detect the power of the signal transmitted by the transmitter element over a detector power range that is narrower than the transmitter power range; and
a power controller arranged to receive an indication of the power level that is desired to be transmitted by the transmitter element, to receive an indication of the power detected by the detector, and to control the power of transmission of the transmitter element across the full transmitter power range.

47. A method of controlling the power of a signal transmitted by a transmitter element of a telecommunications device comprising the steps of:
detecting the power of the signal transmitted by the transmitter element over a detector power range that is narrower than the power range of the transmitter;
within the detector power range, comparing the power level that is desired to be transmitted by the transmitter element with the detected power of the signal transmitted by the transmitter element; and
controlling the power of transmission of the transmitter element across the full transmitter power range.
